# EUROPEAN PATENT SPECIFICATION

(11) **EP 3 698 681 B1**
(45) Date of publication and mention of the grant of the patent: **17.11.2021**
(21) Application number: 20157652.7
(22) Date of filing: 17.02.2020
(51) Int. Cl.: A47J 27/00

(54) **WIRELESS INDUCTION HEATING COOKER AND WIRELESS INDUCTION HEATING SYSTEM INCLUDING SAME**
DRAHTLOSER INDUKTIONSERWÄRMUNGSKOCHER UND DRAHTLOSES INDUKTIONSERWÄRMUNGSSYSTEM DAMIT
APPAREIL DE CUISSON À CHAUFFAGE PAR INDUCTION SANS FIL ET SYSTÈME DE CHAUFFAGE PAR INDUCTION SANS FIL LE COMPRENANT

(30) Priority: 20.02.2019 KR 20190020140; 14.11.2019 KR 20190145637
(43) Date of publication of application: 26.08.2020
(73) Proprietor: LG Electronics Inc., Yeongdeungpo-gu Seoul 07336 (KR)
(72) Inventor: Nam, Hyeunsik, 08592 Seoul (KR); Kim, Wan Soo, 08592 Seoul (KR); Moon, Hyunwook, 08592 Seoul (KR); Park, Byungkyu, 08592 Seoul (KR); Kim, Yangkyeong, 08592 Seoul (KR)
(74) Representative: Ter Meer Steinmeister & Partner

(56) References cited:
- WO-A1-2016/042123
- CN-A- 107 411 547
- JP-A- 2001 299 570

## Description

### BACKGROUND

### 1. Field

The present disclosure relates to a wireless induction heating cooker in which an internal pot, which is heated through the process of induction heating, has improved temperature uniformity, and a wireless induction heating system including an induction heating apparatus and a wireless induction heating cooker that performs cooking operations by wirelessly receiving power from the induction heating apparatus.

### 2. Background

In recent years, various types of cooking devices to which wireless induction heating is applied have been developed. Against this backdrop, research into a method for heating an item subject to cooking using a magnetic field generated in an induction heating apparatus has been performed.

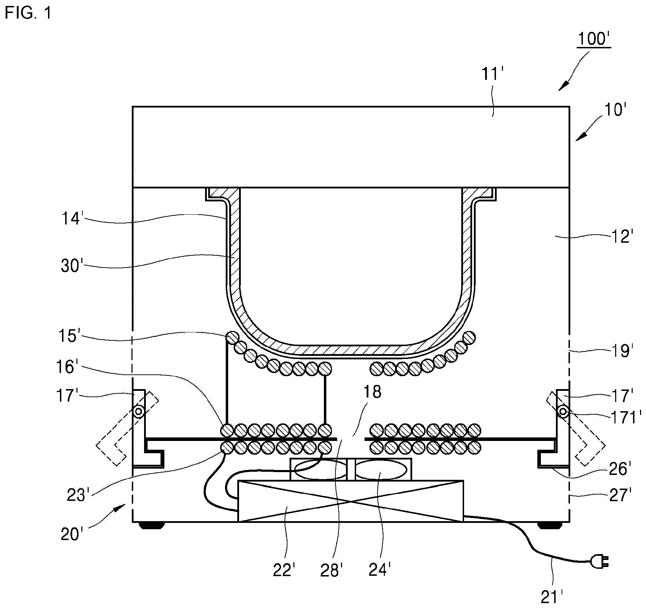

In relation to this, an electric rice cooker that heats an item subject to cooking through the process of induction heating is disclosed in Japanese Patent No. 5943770 (referred to as "prior art document"). Below, the electric rice cooker disclosed in the prior art document is described with reference to FIG. 1.

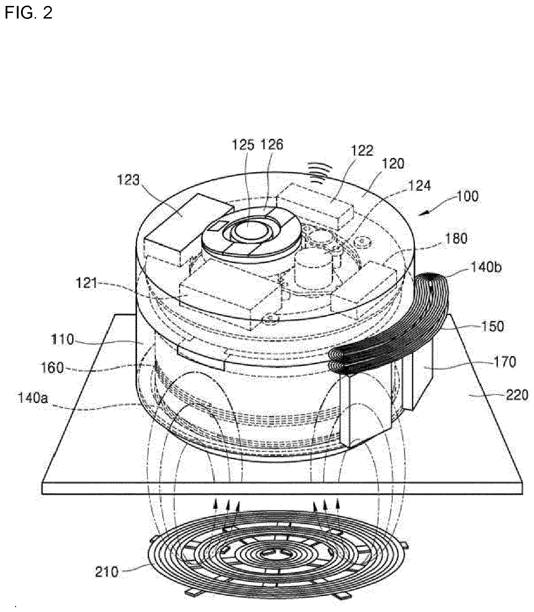

FIG. 1 is a lateral cross-sectional view illustrating an electric rice cooker of the related art. FIG. 1 is excerpted from the drawings (FIG. 2) of the prior art document and illustrates an entire structure of the electric rice cooker 100' disclosed in the prior art document. Some of the reference numerals in FIG. 1 may differ from those in the drawing of the prior art document.

Referring to FIG. 1, in the electric rice cooker 100' of the related art, an internal pot 30' is accommodated in an internal pot accommodation part 14', and an induction heating coil 15' for heating the internal pot 30' is provided at a lower portion of the internal pot accommodation part 14'. A power reception coil for heating 16', which receives power to be supplied to the induction heating coil 15' from a power unit 20', is provided on a bottom surface of a main body 12' of a rice cooking unit 10'.

With the above-described structure disclosed in the prior art document, induced currents by a magnetic field generated in a power supply coil for heating 23' provided at the power unit 20' are generated in the power reception coil for heating 16'. Additionally, induced currents by a magnetic field generated in the power reception coil for heating 16' are generated in the induction heating coil 15', and the induced currents generated in the induction heating coil 15' heats the internal pot 30'.

However, according to the prior art document, for heating the internal pot 30', a priprimary power delivery process between the power supply coil for heating 23' and the power reception coil for heating 16', and a secondary power delivery process between the power reception coil for heating 16' and the induction heating coil 15' are required. During the above-described power delivery processes, power (heat) loss may occur.

Although the induction heating coil 15' according to the prior art document is placed along a lower surface of the rounded internal pot, a coil placed at an edge of the internal pot among the induction heating coils 15' becomes far away from the power reception coil for heating 16'. Accordingly, there is a big difference in temperatures of a lower surface of the internal pot 30' and a lateral surface of the internal pot 30'. Thus, according to the prior art document, cooking qualities are undermined due to a lack of temperature uniformity of the internal pot.

In general, various types of electronic devices are built in an electric rice cooker 100'. However, a magnetic field generated in the power supply coil 23' and used to heat the internal pot 30' is disclosed in the prior art document, while power wirelessly supplied from the power unit 20' to drive various electronic devices built into the electric rice cooker 100' is not disclosed in the prior art document at all. Thus, power cannot be efficiently used according to the prior art document.

JP 2001 299 570 A discloses a rice cooker.

CN 107 411 547 A discloses a wireless power supply system for a cooking utensil, and the cooking utensil. The cooking utensil comprises a pot lid and a pot body. The wireless power supply system comprises a receiving coil arranged on the pot lid, a transmitting coil arranged on the pot body, a coil drive circuit, and a voltage processing circuit, wherein the coil drive circuit is connected with the transmitting coil so as to drive the transmitting coil to generate an alternating electromagnetic field; the receiving coil generates an induced voltage signal according to the alternating electromagnetic field; the voltage processing circuit is used for processing the induced voltage signal to output a stabilized power supply so as to provide power to a load. According to the system, the load and the wireless communication module in the pot lid are powered through an electromagnetic induction way.

WO 2016/042123 A1 discloses an induction cooking pan for induction cooking, comprising a base member and an upwardly oriented wall member circumferentially connected thereto. The induction cooking pan further comprises a measurement system connected to a power receiving unit and at least one sensor. The power receiving unit is electrically connected to an inductive transceiver element for receiving supply power and the inductive transceiver element is located in the base member.

### SUMMARY

The present disclosure is directed to providing a wireless induction heating cooker that may improve temperature uniformity of an internal pot that is heated through the process of induction heating.

The present disclosure is directed to providing a wireless induction heating cooker that may heat a lateral surface of an internal pot as well as a bottom surface of the internal pot using a magnetic field generated in a heating coil.

The present disclosure is directed to providing a wireless induction heating cooker that may heat a lateral surface of an internal pot using a magnetic field generated in an area having low efficiency of delivery of heat to a bottom surface of the internal pot.

The present disclosure is directed to providing a wireless induction heating system that may perform entire cooking operations by wirelessly receiving power from an induction heating apparatus.

Aspects of the present disclosure are not limited to the above-described ones. Additionally, other aspects and advantages that have not been mentioned may be clearly understood from the following description and may be more clearly understood from embodiments. Further, it will be understood that the aspects and advantages of the present disclosure may be realized via means and combinations thereof that are described in the appended claims.

These objects are solved by the subject-matter of the independent claims. Further advantageous embodiments and refinements are described in the respective dependent claims.

According to an aspect of the present invention, a wireless induction heating cooker according to independent claim 1 is provided.

According to a further aspect of the present invention, a wireless induction heating system according to independent claim 12 is provided.

The internal pot may have a flat plate area forming a bottom surface thereof, a barrel- or ring-shaped lateral surface and a curved or bent edge area connecting the flat plate area and the lateral surface. The edge area may be curved in a plane perpendicular to the flat plate area. The lateral surface and the flat plate area may be perpendicular to each other.

The lateral surface heating coil is disposed at the lateral surface of the internal pot.

The first power receiving coil may be arranged and configured to be inductively coupled to a heating coil of an induction heating apparatus. The second power receiving coil of the lid is arranged and configured to be inductively coupled to the power transmitting coil.

The first power receiving coil may be, preferably horizontally, placed at a lower portion of an edge area of the internal pot. A bottom surface of the internal pot may include a flat plate area in parallel with the heating coil and the edge area that connects the flat plate area with a lateral, e.g. cylindrical or ring-shaped, surface of the internal pot.

The first power receiving coil may be arranged at a lower portion of an edge area of the internal pot. A bottom surface of the internal pot may include a flat plate area at a lower portion of the internal pot. The edge area may be formed between the flat plate area and the lateral surface of the internal pot. The lateral surface may have a cylindrical shape, ring shape or barrel-shape. The flat plate area may be formed planar, i.e. flat.

The flat plate area may be formed within a first reference radius with respect to a central perpendicular line of the internal pot. The edge area may be formed between the first reference radius and an outer diameter of the internal pot. The outer diameter of the internal pot may be greater than the first reference radius. That is, the flat plate area may be formed within a first reference radius with respect to a central line of the internal pot, and first power receiving coil may be arranged opposite to a portion between the first reference radius and an outer diameter of the internal pot.

The first power receiving coil may be disposed horizontally and/or may have a ring shape. The lateral surface heating coil may be wound along an outer circumferential surface of the internal pot. A horizontal arrangement of a coil may denote an arrangement of the coil having its windings arranged in a horizontal plane, i.e. the windings of the coil may be arranged in a spiral. A vertical arrangement of a coil may denote an arrangement of the coil having its windings arranged in vertical direction, i.e. the windings may all have the same radius or the coil may have a cylindrical shape.

The edge area may be formed between an outer diameter of the internal pot and a second reference radius. The second reference radius may be greater than the outer diameter of the internal pot and/or may be greater than the first reference radius.

One end of the first power receiving coil and one end of the lateral surface heating coil are connected to each other. The other end of the first power receiving coil and the other end of the lateral surface heating coil are connected to each other through a resonance capacitor.

An outer diameter of the first power receiving coil may be smaller than an outer diameter of the heating coil.

Thus, the first power receiving coil may be placed at a lower portion of the inner pot in which induction to the internal pot does not occur. Accordingly, the first power receiving coil may supply electric currents induced by the heating coil to the lateral surface heating coil without reducing an amount of heat generated in the internal pot.

A metallic plate heated by a magnetic field generated in the heating coil may be formed on an outer surface of the internal pot.

The at least one of electronic devices may be provided in the lid.

The wireless induction heating cooker may further include a first power conversion circuit that delivers electric currents induced to the first power receiving coil to the power transmitting coil.

The power transmitting coil may be formed along an outer surface of the main body on one lateral surface of an upper portion of the main body. The second power receiving coil may be formed along an outer surface of the lid on one lateral surface of the lid.

The second power receiving coil may be provided at a position corresponding to a position of the power transmitting coil on one lateral surface of the lid.

The second power receiving coil may be placed to perpendicularly overlap with the power transmitting coil.

The wireless induction heating cooker may further include a second power conversion circuit that delivers electric currents induced to the second power receiving coil to the electronic devices.

The wireless induction heating cooker may use a magnetic field generated in a heating coil to directly heat a bottom surface of an internal pot and may use induced currents generated by the magnetic field to heat a lateral surface of the internal pot, thereby improving temperature uniformity of the internal pot.

The wireless induction heating cooker may include an internal pot placed on a heating coil, and a coil placed perpendicularly on an outer circumferential surface of the internal pot and generating a magnetic field, thereby heating a lateral surface of the internal pot as well as a bottom surface of the internal pot.

The wireless induction heating cooker may supply electric currents, induced to a coil placed at a lower portion of an edge area of an internal pot, to a coil placed on a lateral surface of the internal pot, thereby using a magnetic field generated in an area with low efficiency of delivery of heat to a bottom surface of the internal pot to heat a lateral surface of the internal pot.

The wireless induction heating system may include an induction heating apparatus that generates a magnetic field through a heating coil, and a wireless induction heating cooker that operates using electric currents induced by the magnetic field generated in the heating coil, thereby wirelessly receiving power from the induction heating apparatus and performing entire cooking operations.

The present disclosure may improve temperature uniformity of an internal pot heated through the process of induction heating, thereby improving cooking qualities.

The present disclosure may heat a lateral surface of the internal pot as well as a bottom surface of the internal pot using a magnetic field generated in a heating coil, thereby forming a plurality of paths for heat delivery with a single heat source and ensuring temperature uniformity of the internal pot.

The present disclosure may use a magnetic field generated in an area having low efficiency of delivery of heat to the bottom surface of the internal pot to heat the lateral surface of the internal pot, thereby efficiently using power output by the heating coil for heating the internal pot.

The present disclosure may wirelessly receive power from an induction heating apparatus and may perform entire cooking operations, thereby carrying out all operations for user convenience as well as an operation of cooking an item subject to cooking, without a connection to an external power source or without an internal battery.

Detailed effects of the present disclosure are described together with the above-described effects in the detailed description of the disclosure.

### BRIEF DESCRIPTION OF THE DRAWINGS

Embodiments are described in detail with reference to the following drawings, wherein:
FIG. 1 is a lateral cross-sectional view illustrating an electric rice cooker of the related art;
FIG. 2 is a view illustrating an exemplary wireless induction heating cooker operating on an induction heating apparatus;
FIG. 3 is a lateral cross-sectional view illustrating the wireless induction heating cooker and the induction heating apparatus in FIG. 2;
FIG. 4 is a view illustrating an intern pot heated on a heating coil and each coil placed around the internal pot;
FIGS. 5a and 5b are views illustrating an arrangement of a coil according to each example;
FIGS. 6a and 6b are views illustrating results of comparison of heat conduction performance of an internal pot on the basis of whether a coil is applied;
FIG. 7 is a graph respectively illustrating changes in temperatures of an internal pot on the basis of whether a coil is applied;
FIG. 8 is a view illustrating each coil connected through a resonance capacitor magnetically coupled to a heating coil;
FIG. 9 is a graph illustrating impedance of an exemplary wireless induction heating cooker on the basis of whether a coil and a resonance capacitor are applied;
FIG. 10 is an enlarged view illustrating the power transmitting coil and the second power receiving coil in FIG. 2;
FIG. 11 is a flow chart illustrating control of a wireless induction heating cooker operating on an induction heating apparatus; and
FIG. 12 is a view illustrating an exemplary wireless induction heating system.

### DETAILED DESCRIPTION

The above-described aspects, features and advantages are specifically described with reference to the attached drawings hereunder such that one having ordinary skill in the art to which the present disclosure pertains may easily implement the technical spirit of the disclosure. In *describing* the *disclosure, detailed description* of known technologies in relation to the disclosure *is* omitted if it is deemed to *make* the *gist* of the *present disclosure* unnecessarily *vague.* Below, preferred embodiments of the present disclosure are specifically described with reference to the attached drawings. Throughout the drawings, identical reference numerals denote identical or similar components.

When any component is described as being "at an upper portion (or a lower portion)" of a component, or "on (or under)" a component, any component may be placed on the upper surface (or the lower surface) of the component, and an additional component may be interposed between the component and any component placed on (or under) the component.

When a component is described as being "connected," "coupled" or "connected" to another component, the component may be directly connected or able to be connected to another component; however, it is also to be understood that an additional component may be "interposed" between the two components, or the two components may be "connected," "coupled" or "connected" through an additional component.

The terms "A or B", "at least one of A or/and B", or "one or more of A or/and B" as used herein include all possible combinations of items enumerated with them. For example, "A or B", "at least one of A and B", or "at least one of A or B" means (1) including at least one A, (2) including at least one B, or (3) including both at least one A and at least one B.

The present disclosure relates to a wireless induction heating cooker in which an internal pot, which is heated through the process of induction heating, has improved temperature uniformity, and a wireless induction heating system including an induction heating apparatus and a wireless induction heating cooker that performs cooking operations by wirelessly receiving power from the induction heating apparatus.

First, an exemplary wireless induction heating cooker is described with reference to FIGS. 2 to 11.

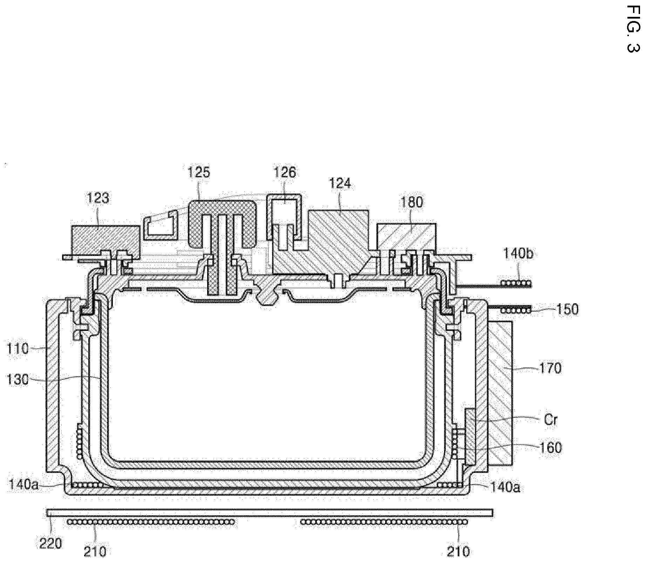

FIG. 2 is a view illustrating an exemplary wireless induction heating cooker operating on an induction heating apparatus, and FIG. 3 is a lateral cross-sectional view illustrating the wireless induction heating cooker and the induction heating apparatus in FIG. 2.

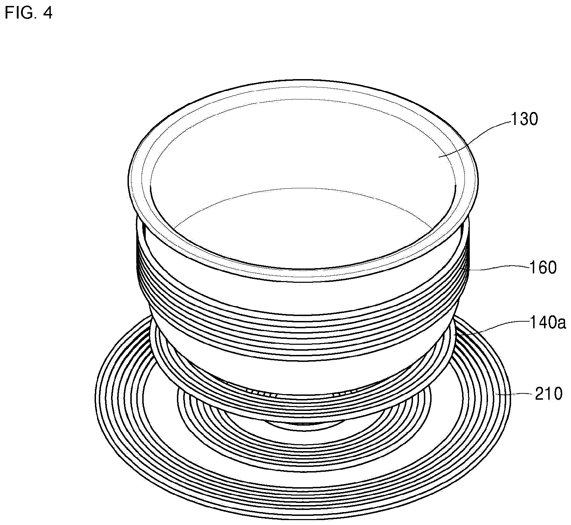

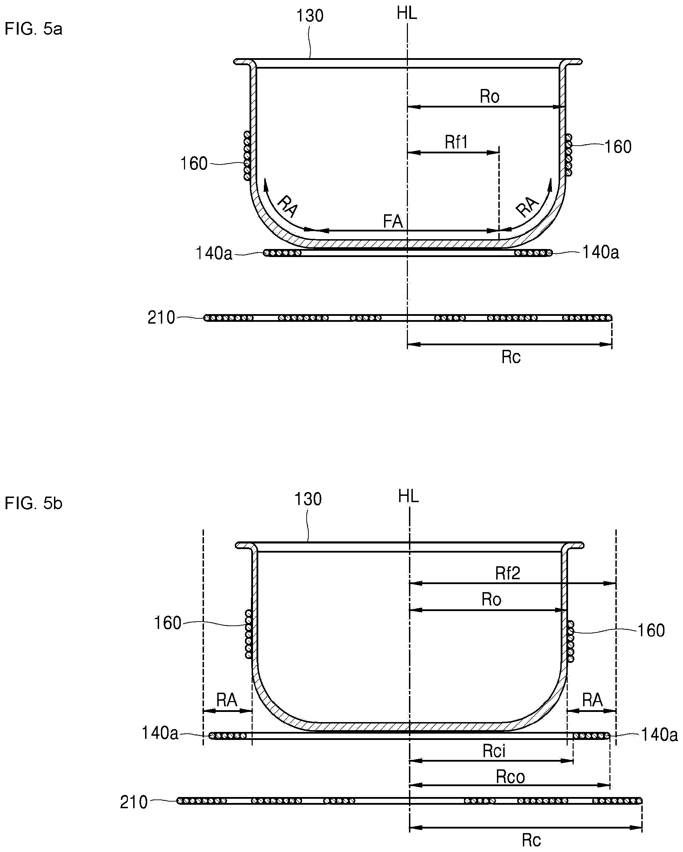

FIG. 4 is a view illustrating an intern pot heated on a heating coil and each coil placed around the internal pot. Additionally, FIGS. 5a and 5b are views illustrating an arrangement of a coil according to each example.

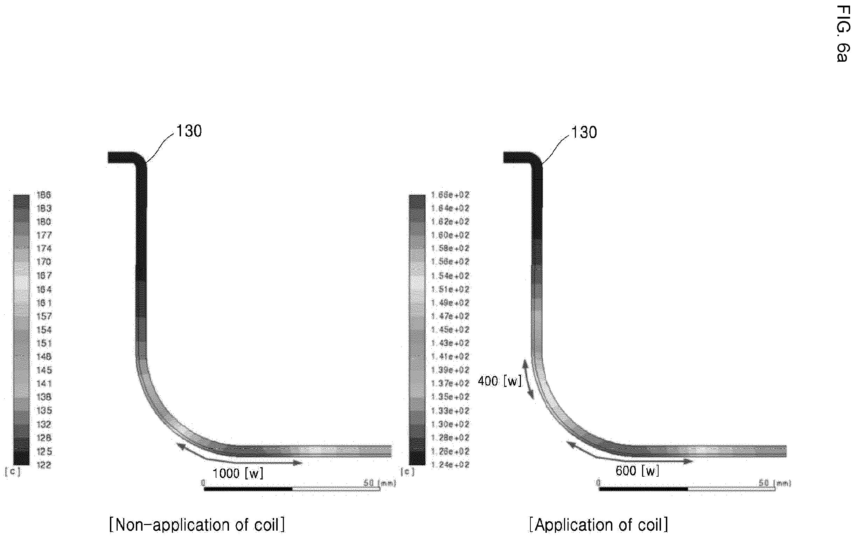

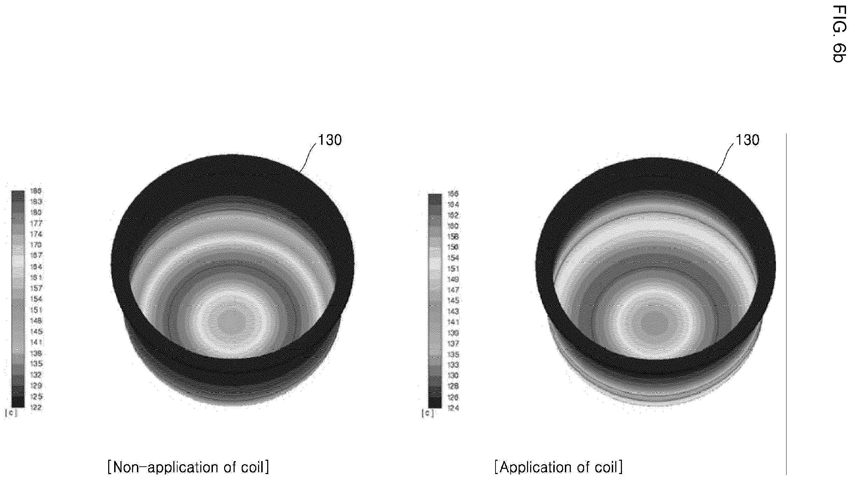

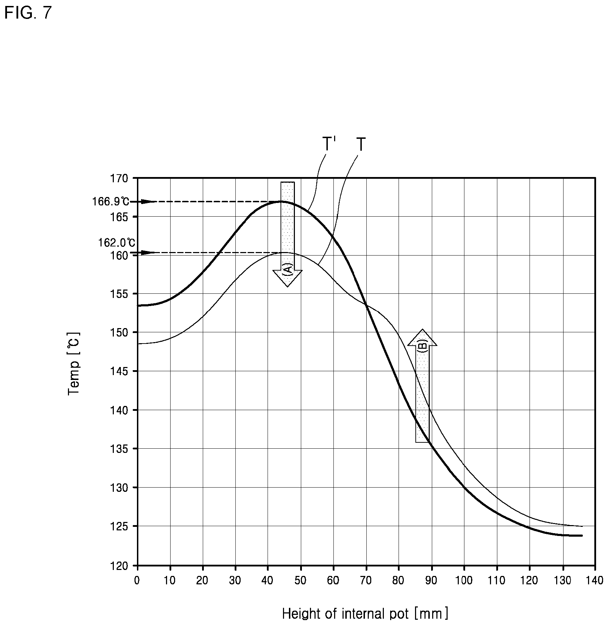

FIGS. 6a and 6b are views illustrating results of comparison of heat conduction performance of an internal pot on the basis of whether a coil is applied, and FIG. 7 is a graph respectively illustrating changes in temperatures of an internal pot on the basis of whether a coil is applied.

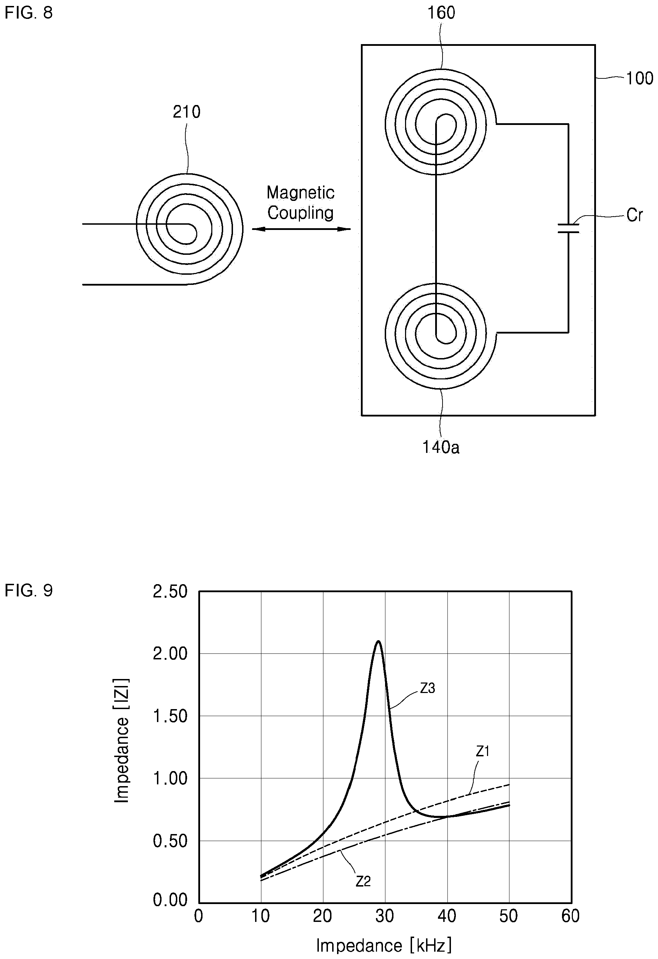

FIG. 8 is a view illustrating each coil connected through a resonance capacitor magnetically coupled to a heating coil, and FIG. 9 is a graph illustrating impedance of an exemplary wireless induction heating cooker on the basis of whether a coil and a resonance capacitor are applied.

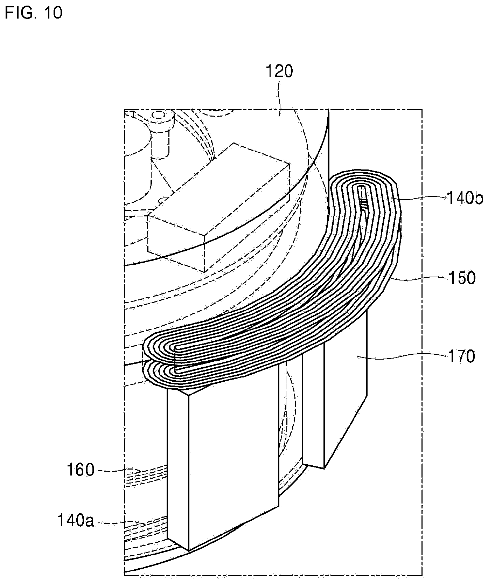

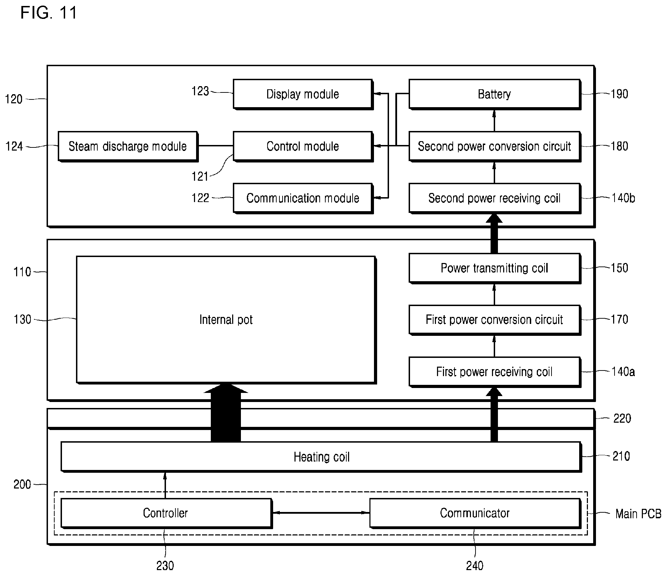

FIG. 10 is an enlarged view illustrating the power transmitting coil and the second power receiving coil in FIG. 2. Additionally, FIG. 11 is a flow chart illustrating control of a wireless induction heating cooker operating on an induction heating apparatus.

Referring to FIGS. 2 and 3, the exemplary wireless induction heating cooker 100 may include a main body 110, a lid 120, an internal pot 130, a first power receiving coil 140a and a lateral surface heating coil 160, a power transmitting coil 150 and a second power receiving coil 140b. Additionally, the lid 120 may include a control module 121, a communication module 122, a display module 123, a steam discharge module 124, a pressure weighty 125, and a noise reduction module 126.

The wireless induction heating cooker 100 illustrated in FIGS. 2 and 3 are provided as an embodiment, and components of the wireless induction heating cooker 100 are not limited to those of the embodiment in FIGS. 2 and 3. When necessary, some components may be added, modified or removed.

The wireless induction heating cooker 100 may operate on any induction heating apparatus that heats an item subject to heating through the process of electromagnetic induction.

The wireless induction heating cooker 100, as illustrated in FIGS. 2 and 3, may operate in the state of being placed on an upper plate 220 of any induction heating apparatus provided with a heating coil 210. Specifically, the wireless induction heating cooker 100 may operate in the state of being placed on the upper plate 220 on a perpendicular line of the heating coil 210.

Electric currents may flow through the heating coil 210 according to control by the induction heating apparatus. Accordingly, a magnetic field may be generated in the heating coil 210. The magnetic field generated in the heating coil 210 may induce electric currents to the below-described internal pot 130 and first power receiving coil 140a, and may heat a bottom surface and a lateral surface of the internal pot 130.

For example, the main body 110, which is a case supporting a lower portion and a lateral portion of the wireless induction heating cooker 100, may have a cylinder shape the upper portion of which is opened. In the main body 110, cooking may be performed. Specifically, the below-described internal pot 130 is stored in the main body 110, and various types of grain such as rice may be heated and cooked in the internal pot 130.

The lid 120, which is a case sealing an upper portion of the wireless induction heating cooker 100, may be coupled onto an upper surface of the main body 110. In this case, the lid 120 may be coupled onto the upper surface of the main body 100 such that the lid 120 is opened and closed with respect to the upper surface of the main body 110.

As an example, the lid 120 may be hinge-coupled to the main body 110 and may be optionally opened and closed. Specifically, the lid 120 is coupled to a hinge shaft (not illustrated) provided at an edge of one surface of the upper portion of the main body 110 and is swiveled around the hinge shaft such that the lid 120 is optionally opened and closed with respect to the upper surface of the main body 110.

As another example, the lid 120 may be attached to and detached from the main body 110. Specifically, the lid 120 may be coupled onto the upper surface of the main body 110 by a plurality of coupling members (not illustrated) provided at an edge of the upper portion of the main body 110. In this case, the lid 120 is completely separated from the main body 110. Accordingly, the lid 120 may be readily cleaned.

The lid 120, as illustrated in FIGS. 2 and 3, may be provided with at least one electronic device. The lid 120, for example, may be provided with a control module 121 that controls entire operations of the wireless induction heating cooker 100, a communication module 122 that performs data communication with the above-described induction heating apparatus, a display module 123 that visually outputs state information of the wireless induction heating cooker 100, and the like. Additionally, though not illustrated in the drawing, the lid 120 may be further provided with a battery for supplying a power source to the above-described control module 121, communication module 122 and display module 123.

The control module 121, the communication module 122, and the display module 123 may be implemented as a printed circuit board (PCB) comprised of a plurality of integrated circuits (IC).

Further, the lid 120 may be provided with a pressure weight 125 for maintaining internal pressures of the wireless induction heating cooker 100 at a constant level, and a noise reduction module 126 that is provided with a sound absorption member therein to reduce noise when steam is discharged. Furthermore, the lid 120 may be provided with a steam discharge module 124 (e.g., a solenoid valve) for discharging steam inside the wireless induction heating cooker 100 outwards according to a specific control signal.

The internal pot 130 may be stored in the main body 110 and may be heated by a magnetic field generated in the heating coil 210 of the induction heating apparatus. The internal pot 130 may have a shape corresponding to a shape of a storage space provided in the main body 110. For example, when the main body 110 has a cylinder shape, the internal pot 130 may also have a cylinder shape the upper surface of which is opened.

When the wireless induction heating cooker 100 is placed on an upper portion of the induction heating apparatus, the heating coil 210 and a lower surface of the internal pot 130 may be placed to face each other with a bottom surface of the main body 110 therebetween. When electric currents flow through the heating coil 210, a magnetic field generated in the heating coil 210 may induce electric currents to the internal pot 130, and Joule's heat may be generated in the internal pot 130 by the induced currents.

For generation of induced currents, the internal pot 130 may include any material having magnetic properties. The internal pot 130, for example, may include cast iron including iron (Fe), or clad in which iron (Fe), aluminum (Al), and stainless steel and the like are welded.

The first power receiving coil 140a may be placed horizontally at a lower portion of an edge area (RA) of the internal pot 130, and electric currents may be induced to the first power receiving coil 140a by a magnetic field generated in the heating coil 210.

The edge area of the internal pot 130, which is an area defined in a radial direction, may be an area adjacent to a cylindrical surface of the internal pot 130. In other words, the edge area may be defined as an area adjacent to a circumference of the internal pot 130 when the internal pot 130 is seen from its top. Below, the edge area is described with reference to FIGS. 5a and 5b.

Referring to FIGS. 2 and 3, the first power receiving coil 140a may be placed on an inner bottom surface of the main body 110 at a lower portion of the edge area of the internal pot 130. The first power receiving coil 140a may be placed in close contact with the inner bottom surface of the main body 110, and, when an internal pot support member (not illustrated) is provided on the the inner bottom surface of the main body 110, may also placed on the internal pot support member.

The first power receiving coil 140a may have a ring shape with a predetermined inner diameter and a predetermined outer diameter, and a cross section of the first power receiving coil 140a may be placed at the lower portion of the edge area.

The first power receiving coil 140a may be placed horizontally. Specifically, the first power receiving coil 140a, which is a single-layered flat plate coil, may be placed horizontally in parallel with the heating coil 210. Accordingly, when electric currents flow through the heating coil 210, the electric currents may be induced to the first power receiving coil 140a by a magnetic field generated in the heating coil 210.

The lateral surface heating coil 160 may be placed perpendicularly on an outer circumferential surface of the internal pot 130, may be connected to the first power receiving coil 140a, and may heat the internal pot 130 using electric currents induced to the first power receiving coil 140a.

Referring back to FIGS. 2 and 3, the lateral surface heating coil 160 may be wound along the outer circumferential surface of the internal pot 130, and, accordingly, may be placed in close contact with the outer circumferential surface of the internal pot 130. If the main body 110 is provided with an internal pot support member for supporting the internal pot 130 in the main body 110, and the internal pot support member supports the outer circumferential surface of the internal pot 130 as well as the bottom surface of the internal pot 130, the lateral surface heating coil 160 may also be placed on the internal pot support member.

The lateral surface heating coil 160 may be perpendicularly placed. Specifically, the lateral surface heating coil 160 is a coil having a plurality of layers according to the number of its turns, and each of the layers may be perpendicularly arranged in parallel along the outer circumferential surface of the internal pot 130.

The lateral surface heating coil 160 may be electrically connected with the first power receiving coil 140a. In other words, one end of the lateral surface heating coil 160 may be connected with one end of the first power receiving coil 140a. Thus, the first power receiving coil 140a and the lateral surface heating coil 160 may be implemented as a single metallic wire, and, in this case, the first power receiving coil 140a and the lateral surface heating coil 160 may be distinguished according to their positions and functions.

The lateral surface heating coil 160 may be electrically connected with the first power receiving coil 140a, and, accordingly, electric currents induced to the first power receiving coil 140a may flow through the lateral surface heating coil 160. When electric currents flow through the lateral surface heating coil 160, a magnetic field may be generated in the lateral surface heating coil 160, and the magnetic field generated in the lateral surface heating coil 160 may induce electric currents to the outer circumferential surface of the internal pot 130 and may heat the internal pot 130, specifically, the lateral surface of the internal pot 130.

FIG. 4 is a view separately illustrating only a heating coil 210, an internal pot 130, a first power receiving coil 140a placed at the edge area of the internal pot 130, and a lateral surface heating coil 160 placed on the outer circumferential surface of the internal pot 130, for convenience of description.

Below, a structure of the internal pot 130, and an arrangement of the first power receiving coil 140a and the lateral surface heating coil 160 are described with reference to FIGS. 4, 5a and 5b.

A surface area of the bottom surface of the internal pot 130 may be smaller than a surface area of an area formed by the heating coil 210. The area formed by the heating coil 210 may be a minimum area that may include all parts of the heating coil 210.

For example, when the heating coil 210 is a planar circular coil, a surface area of the area formed by the heating coil 210 may be a surface area of a circle determined by a coil radius that is a distance from a center of the heating coil 210 to an outer circumferential surface of the heating coil 210.

As illustrated in FIGS. 5a and 5b, a surface area of the bottom surface of the internal pot 130 may be a surface area of a circle determined by an outer diameter (Ro) of the internal pot 130, which is distance between a central perpendicular line (HL) of the internal pot 130 and the outer circumferential surface of the internal pot 130.

In this case, the surface area of the circle determined by the outer diameter (Ro) of the internal pot 130 may be smaller than the surface area of the circle determined by the coil radius (Rc). Accordingly, a magnetic field generated in the heating coil 210 may all be delivered to the bottom surface of the internal pot 130 without a leak in an area in which the internal pot 130 is placed.

The present disclosure, as described above, may receive a magnetic field generated in the heating coil 210 without a leak, thereby efficiently raising temperatures of the internal pot 130 with output from the induction heating apparatus.

Referring to FIG. 5a, as an example, the bottom surface of the internal pot 130 may include a flat plate area (FA) in parallel with the heating coil 210, and an edge area (RA) connecting the flat plate area (FA) and the lateral surface of the internal pot 130.

An edge portion (referred to as "rounded portion") of the bottom surface of the internal pot 130 may be rounded such that an item subject to cooking is easily taken out after cooking of the item subject to cooking is completed. Accordingly, the bottom surface of the internal pot 130 may include a flat plate area (FA) that is a flat portion and that is formed in parallel with the heating coil 210, and a rounded portion that is rounded to connect the bottom surface and the lateral surface of the internal pot 130.

As an example, the edge area (RA) of the internal pot 130, as illustrated in FIG. 5a, may be a rounded portion. In this case, the first power receiving coil 140a may be placed horizontally at a lower portion of the edge area (RA) of the internal pot 130, in other words, a lower portion of the rounded portion.

Specifically, the flat plate area (FA) of the bottom surface of the internal pot 130 may be formed within a first reference radius (Rfl) with respect to the central perpendicular line (HL) of the internal pot 130, and the edge area (RA) of the bottom surface of the internal pot 130 may be formed between the first reference radius (Rfl) and the outer diameter (Ro) of the internal pot 130. The first reference radius (Rfl) may be set by a user in designing a wireless induction heating cooker according to the needs.

In this structure, the first power receiving coil 140a may be placed between the first reference radius (Rfl) and the outer diameter (Ro) of the internal pot 130. In other words, a range of horizontal arrangements of the first power receiving coil 140a may be a range between the first reference radius (Rfl) and the outer diameter (Ro) of the internal pot 130.

Referring back to FIG. 5a, a distance between the edge area (RA) and the heating coil 210 may become greater toward a portion farther away from a center of the internal pot 130.

Specifically, a perpendicular distance (Rd') between the edge area (RA) and the heating coil 210 at a portion relatively far from the center of the internal pot 130 may be greater than a perpendicular distance (Rd) between the edge area (RA) and the heating coil 210 at a portion relatively close to the center of the internal pot 130.

Accordingly, an amount of heat generated by a magnetic field generated in the heating coil 210 may be smaller in the edge area (RA) than in the flat plate area (FA). An amount of heat generated in a portion of the edge area (RA), which is far from the center of the internal pot 130, may be smaller than an amount of heat generated in a portion of the edge area (RA), which is close to the center of the internal pot 130.

The first power receiving coil 140a is placed at the lower portion of the edge area (RA), in which the smallest amount of heat is generated, thereby supplying electric currents induced by the heating coil 210 to the lateral surface heating coil 160 without causing a significant reduction in a total amount of heat generated in the internal pot 130.

As another example, the first power receiving coil 140a, as illustrated in FIG. 5b, may be perpendicularly formed outside of the internal pot 130. Specifically, the edge area (RA) of the internal pot 130 may be formed between the outer diameter (Ro) of the internal pot 130 and the second reference radius (Rf2). The second reference radius (Rf2) may be set by the user in designing a wireless induction heating cooker according to the needs.

The structure of the internal pot 130 in FIG. 5b may be the same as the structure of the internal pot 130 in FIG. 5a. The edge area (RA) may be perpendicularly formed in the internal pot 130 in FIG. 5a, while the edge area (RA) may be perpendicularly formed outside of the internal pot 130 in FIG. 5b.

In this case, the first power receiving coil 140a may be placed at the lower portion of the edge area (RA) of the internal pot 130.

Specifically, in FIG. 5b, the first power receiving coil 140a that has a cross section with a predetermined horizontal width and with a ring shape and that has a structure in which the inner diameter (Rci) of the first power receiving coil 140a is larger than the outer diameter (Ro) of the internal pot 130 may be placed at the lower portion of the internal pot 130.

However, the outer diameter (Rco) of the first power receiving coil 140a may be smaller than the coil radius (Rc) of the heating coil 210 such that induced currents are efficiently generated in the first power receiving coil 140a.

In other words, as illustrated in FIG. 5b, the inner diameter (Rci) of the first power receiving coil 140a may be designed to be larger than the outer diameter (Ro) of the internal pot 130, and the outer diameter (Rco) of the first power receiving coil 140a may be designed to be smaller than the coil radius (Rc) of the heating coil 210. Accordingly, an area formed by the first power receiving coil 140a may all be perpendicularly included in an area formed by the heating coil 210. Thus, a magnetic field generated in the heating coil 210 may all be delivered to the first power receiving coil 140a without a leak in the area in which the first power receiving coil 140a is placed.

The first power receiving coil 140a, as described above, is placed at the lower portion of the edge area (RA) in which perpendicular heat conduction to the internal pot 130 does not occur. Accordingly, the first power receiving coil 140a may supply electric currents induced by the heating coil 210 to the lateral surface heating coil 160 without reducing an amount of heat generated in the internal pot 130.

The lateral surface heating coil 160, as described above, may be supplied with electric currents induced to the first power receiving coil 140a and may generate a magnetic field, and the outer circumferential surface of the internal pot 130, in which the lateral surface heating coil 160 is placed, may be heated by the magnetic field generated in the lateral surface heating coil 160.

The present disclosure, as described above, may use a magnetic field generated in an area having low efficiency of delivery of heat to the bottom surface of the internal pot to heat the lateral surface of the internal pot, thereby efficiently using power output by the heating coil in heating the internal pot.

For enhanced efficiency of heating operations, the number of turns of the lateral surface heating coil 160 may be more than the number of turns of the first power receiving coil 140a.

As described with reference to FIGS. 5a and 5b, the first power receiving coil 140a is provided to generate induced currents while minimizing a reduction in an amount of heat generated in the internal pot 130, and to supply the generated induced currents to the lateral surface heating coil 160. Additionally, the lateral surface heating coil 160 is provided to heat the outer circumferential surface of the internal pot 130 in a wide range.

As a means to achieve the above-described purposes, the first power receiving coil 140a has a relatively narrow horizontal width to minimize a reduction in the amount of heat generated in the internal pot 130, and the lateral surface heating coil 160 has a relatively wide perpendicular width to encircle the outer circumferential surface of the internal pot 130 in a wide range.

When thicknesses of metallic wires constituting the first power receiving coil 140a and the lateral surface heating coil 160 are the same, the horizontal width and perpendicular width of each coil 140a, 160 may be proportional to the number of turns of each coil 140a, 160. Accordingly, the number of turns of the first power receiving coil 140a may be less than the number of turns of the lateral surface heating coil 160.

FIGS. 6a and 6b respectively show temperatures of an internal pot 130 to which coils are not applied, and temperatures of an internal pot 130 to which the above-described first power receiving coil 140a and the lateral surface heating coil 160 are applied.

When the bottom surface of the internal pot 130 to which coils are not applied is heated by an output of 1000 [W], the bottom surface of the internal pot 130 is heated up to 186 [°C] while the upper portion of the internal pot 130 is heated only up to 122 [°C]. Accordingly, there is a big difference in the temperatures of the surface of the internal pot 130, which is a maximum of 64 [°C].

When the bottom surface of the internal pot 130 to which coils are applied is heated by an output of 600 [W], and the outer circumferential surface (the lateral surface) of the internal pot 130 is heated by an output of 400 [W], the bottom surface of the internal pot 130 is heated up to 166 [°C] while the upper portion of the internal pot 130 is heated up to 124 [°C]. Accordingly, there is a difference in the temperatures of the surface of the internal pot 130, which is a maximum of 42 [°C]. The difference in the temperatures of the surface of the internal pot 130 to which coils are applied is 22 [°C] less than the difference in the temperatures of the surface of the internal pot 130 to which coils are not applied.

In other words, the internal pot 130 to which coils are applied has better uniformity of temperature distribution than the internal pot 130 to which coils are not applied.

FIG. 7 is a graph illustrating temperatures (T') of the internal pot 130, to which coils are not applied, and temperatures (T) of the internal pot 130, to which the above-described first power receiving coil 140a and the lateral surface heating coil 160 are applied, on the basis of heights of the internal pots 130.

Temperature of the internal pot 130 to which coils are applied may be lower than temperature of the internal pot 130 to which coils are not applied at a relatively low height portion (A), and temperature of the internal pot 130 to which coils are applied may be higher than temperature of the internal pot 130 to which coils are not applied at a relatively high height portion (B). By doing so, when the first power receiving coil 140a and the lateral surface heating coil 160 are applied to the internal pot 130, the entire uniformity of temperature distribution of the internal pot 130 may be ensured.

The present disclosure, as described above, may heat the lateral surface of the internal pot as well as the bottom surface of the internal pot using a magnetic field generated in the heating coil, thereby forming a plurality of paths for heat delivery with a single heat source and ensuring uniformity of temperature of the internal pot.

When the first power receiving coil 140a and the lateral surface heating coil 160 are not applied to the internal pot 130, total impedance (|Z|) of the wireless induction heating cooker 100 may be the same as impedance of the internal pot 130. However, when the first power receiving coil 140a and the lateral surface heating coil 160 are applied to the internal pot 130, the total impedance (|Z|) of the wireless induction heating cooker 100 may be the same as a parallel synthesis of impedance of the internal pot 130 and impedance of the first power receiving coil 140a and the lateral surface heating coil 160.

Accordingly, when the first power receiving coil 140a and the lateral surface heating coil 160 are applied to the internal pot 130, the total impedance (|Z|) of the wireless induction heating cooker 100 may be reduced, and, because of a reduction in the total impedance (|Z|), an output delivered from the heating coil 210 to the internal 130 may also be reduced.

To prevent a reduction in the output, the other end of the first power receiving coil 140a and the other end of the lateral surface heating coil 160 may be connected to each other through a resonance capacitor (Cr).

Referring to FIG. 8, one end of the first power receiving coil 140a, as described above, may be connected to one end of the lateral surface heating coil 160. Additionally, the other end of the first power receiving coil 140a and the other end of the lateral surface heating coil 160 may be respectively connected to both ends of the resonance capacitor (Cr). Accordingly, the first power receiving coil 140a, the lateral surface heating coil 160, and the resonance capacitor (Cr) may form an LC resonance circuit.

The LC resonance circuit, formed as described above, may be magnetically coupled to the heating coil 210 at a resonance frequency, and, in this case, the total impedance (|Z|) of the wireless induction heating cooker 100 may be maximized.

FIG. 9 respectively shows the total impedance (Z1, Z2, and Z3) of the wireless induction heating cooker 100 that is not provided with coils, that is provided with the first power receiving coil 140a and the lateral surface heating coil 160, and that is provided with each coil 140a, 160 and the resonance capacitor (Cr).

The total impedance (Z2) of the wireless induction heating cooker 100 that includes the first power receiving coil 140a and the lateral surface heating coil 160 may be lower than the total impedance (Z1) of the wireless induction heating cooker 100 that does not include each coil 140a, 160. The total impedance (Z3) of the wireless induction heating cooker 100 that includes each coil 140a, 160 and the resonance capacitor (Cr) may be much higher than the total impedance (Z1, Z2) of the wireless induction heating cooker 100 that does not include coils and that includes the first power receiving coil 140a and the lateral surface heating coil 160, at the resonance frequency (e.g., 28kH).

When the first power receiving coil 140a and the lateral surface heating coil 160, and the resonance capacitor (Cr) connect and form the LC resonance circuit, and the wireless induction heating cooker 100 operates at the resonance frequency, an output delivered from the heating coil 210 to the internal pot 130 may be controlled at a maximum level.

When the output from the heating coil 210 is controlled at a maximum level, an amount of heat generated in the internal pot 130 may also be maximized, thereby making it possible to heat the internal pot 130 rapidly.

To enhance the efficiency of power delivery and of heat conduction of the internal pot 130, a metallic plate (not illustrated) that is heated by a magnetic field generated in the heating coil 210 may be formed on an outer surface of the internal pot 130.

To enhance the efficiency of heat conduction, the internal pot 130 may be comprised of a material (e.g., aluminum (Al), copper (Cu), and the like) that has high thermal conductivity while having almost no magnetic properties or no magnetic properties. In this case, almost no or no induced currents are generated by a magnetic field on the bottom surface of the internal pot 130.

Accordingly, although the internal pot 130 has high thermal conductivity, heat is not generated on the bottom surface of the internal pot 130. To generate heat at the internal pot 130, a metallic plate may be formed on the bottom surface of the internal pot 130.

The metallic plate may be comprised of a material having magnetic properties, and may be attached onto the bottom surface of the internal pot 130 or may be coated on the bottom surface of the internal pot 130 through the process of metal spraying.

Accordingly, when a magnetic field is generated in the heating coil 210, heat may be generated by induced currents at the metallic plate, and the heat generated at the metallic plate may be delivered to the internal pot 130.

The present disclosure, as described above, may improve uniformity of temperatures of the internal pot that is heated through the process of induction heating. As a result, the cooker may have improved cooking qualities.

The power transmitting coil 150 may be provided on one lateral surface of the upper portion of the main body 110, and may receive the electric currents induced to the first power receiving coil 140a and generate a magnetic field.

Referring back to FIG. 3, the power transmitting coil 150 may be supported by any support member and may be fixed on one lateral surface of the upper portion of the main body 110. The power transmitting coil 150 may be placed in close contact with the lateral surface of the main body 110 such that volume of the wireless induction heating cooker 100 is minimized.

Specifically, the power transmitting coil 150 may have a flat plate shape and may be placed horizontally on the lateral surface of the main body 110 to face the below-described second power receiving coil 140b. That is, the power transmitting coil 150 may be placed to protrude perpendicularly on the lateral surface of the main body 110.

As an example, the power transmitting coil 150 may be formed on one lateral surface of the upper portion of the main body 110 along an outer surface of the main body 110.

Referring to FIG. 10, when the main body 110 has a cylinder shape, the power transmitting coil 150 may be formed along an outer circumferential surface of the main body 110 on one lateral surface of the upper portion of the main body 110. Specifically, the power transmitting coil 150 may be placed in close contact with the outer circumferential surface of the main body 110 within a preset circular arc length. Accordingly, the power transmitting coil 150 may have a deformed oval shape in which a length of a major axis adjacent to the main body 110 is within the preset circular arc length.

When the main body 110 has a rectangle pillar shape, the power transmitting coil 150may be formed along the outer surface of the main body 110 on one lateral surface of the upper portion of the main body 110. In other words, the power transmitting coil 150 may have a rectangle shape in which a horizontal length adjacent to the main body 110 is within a preset length, or may have an oval shape in which a length of the major axis adjacent to the main body 110 is within the preset circular arc length.

The power transmitting coil 150 may be electrically connected with the first power receiving coil 140a, and, accordingly, electric currents induced to the first power receiving coil 140a may flow through the power transmitting coil 150. When electric currents flow through the power transmitting coil 150, a magnetic field may be generated in the power transmitting coil 150.

The wireless induction heating cooker 100 may further include a first power conversion circuit 170 that delivers electric currents induced to the first power receiving coil 140a to the power transmitting coil 150.

Referring to FIGS. 2, 3 and 10, the first power conversion circuit 170 may be provided on one lateral surface of the main body 110 in the form of a packaged integrated circuit. Specifically, the first power conversion circuit 170 may be fixedly provided on one lateral surface of the main body 110 at a lower portion of the power transmitting coil 150.

Referring to FIG. 11, an input terminal of the first power conversion circuit 170 may be connected to the first power receiving coil 140a, and an output terminal of the first power conversion circuit 170 may be connected to the power transmitting coil 150. Accordingly, the first power conversion circuit 170 may convert the electric currents induced to the first power receiving coil 140a into stable alternating currents and may supply the same to the power transmitting coil 150.

An amount of electric currents induced to the first power receiving coil 140a may vary depending on an output from the heating coil 210, load of the internal pot 130 (moisture included in an item subject to cooking, an amount of an item subject to cooking, and the like). Additionally, an amount of electric currents induced to the first power receiving coil 140a may also vary depending on a degree of matching on the basis of a relative position of the heating coil 210 and the wireless induction heating cooker 100.

The first power conversion circuit 170 may store the electric currents induced to the first power receiving coil 140a as a predetermined voltage to minimize changes in the amount of the electric currents, and may convert the stored voltage into stable alternating currents and supply the stable alternating currents to the power transmitting coil 150.

Specifically, as an example, the first power conversion circuit 170 may include a low-pass filter (LPF), a converter and an inverter. First, the first power conversion circuit 170 may remove high harmonics of electric currents induced to the first power receiving coil 140a using the low-pass filter. Next, the first power conversion circuit 170 may convert the electric currents having passed through the low-pass filter into a DC voltage using the converter. Next, the first power conversion circuit 170 may convert the DC voltage converted by the converter into stable alternating currents and may supply the stable alternating currents to the power transmitting coil 150, using the inverter.

Thus, the power transmitting coil 150 may receive predetermined-frequency alternating currents and may generate a magnetic field.

The second power receiving coil 140b may be provided on one lateral surface of the lid 120 and may supply electric currents induced by a magnetic field generated in the power transmitting coil 150 to at least one of electronic devices provided at the lid 120.

Referring back to FIG. 3, the second power receiving coil 140b may be supported by any support member and may be fixed on one lateral surface of the lid 120. The second power receiving coil 140b may be placed in close contact with the lateral surface of the lid 120 such that volume of the wireless induction heating cooker 100 is minimized.

Specifically, like the power transmitting coil 150, the second power receiving coil 140b may have a flat plate shape and may be placed horizontally on the lateral surface of the lid 120 to face the power transmitting coil 150. That is, the second power receiving coil 140b may be placed to protrude perpendicularly on the lateral surface of the lid 120.

As an example, the second power receiving coil 140b may be formed on one lateral surface of the lid 120 along an outer surface of the lid 120.

Referring back to FIG. 10, when the lid 120 has a cylinder shape, the second power receiving coil 140b may be formed along an outer circumferential surface of the lid 120 on one lateral surface of the lid 120. Specifically, the second power receiving coil 140b may be placed in close contact with the outer circumferential surface of the lid 120 within a preset circular arc length. Accordingly, the second power receiving coil 140b may have a deformed oval shape in which a length of a major axis adjacent to the lid 120 is within the preset circular arc length.

When the lid 120 has a rectangle pillar shape, the second power receiving coil 140b may be formed along the outer surface of the lid 120 on one lateral surface of the lid 120. In other words, the second power receiving coil 140b may have a rectangle shape in which a horizontal length adjacent to the lid 120 is within a preset length, or may have an oval shape in which a length of the major axis adjacent to the lid 120 is within the preset circular arc length.

The second power receiving coil 140b may be provided on one lateral surface of the lid 120 at a position corresponding to the position of the power transmitting coil 150.

Induced currents may be generated in the second power receiving coil 140b by a magnetic field generated in the power transmitting coil 150. To maximize an amount of electric currents generated in the second power receiving coil 140b, the second power receiving coil 140b may be placed at a position corresponding to the position of the power transmitting coil 150. Specifically, the second power receiving coil 140b may be placed to face the power transmitting coil 150 at a position at which the second power receiving coil 140b is magnetically coupled to the power transmitting coil 150 with a maximum coupling factor.

As an example, the second power receiving coil 140b may be placed to perpendicularly overlap with the power transmitting coil 150.

Specifically, the second power receiving coil 140b may partially or completely overlap with the power transmitting coil 150. In other words, when the wireless induction heating cooker 100 is seen from its top, all or part of the second power receiving coil 140b may be included in an area formed by the power transmitting coil 150. However, in order for the second power receiving coil 140b and the power transmitting coil 150 are magnetically coupled with a maximum coupling factor, preferably, the second power receiving coil 140b is entirely included in the area formed by the power transmitting coil 150.

Referring back to FIG. 10, the second power receiving coil 140b and the power transmitting coil 150 may have the same size and shape. In this case, the second power receiving coil 140b may be perpendicularly overlapped with the power transmitting coil 150 completely. In other words, the second power receiving coil 140b and the power transmitting coil 150 of the same size and shape may be spaced a predetermined perpendicular distance apart at the same horizontal position and may be provided at the lid 120 and the main body 110 respectively.

The second power receiving coil 140b may have a surface area smaller than that of the power transmitting coil 150. In this case, the second power receiving coil 140b may be completely included in the surface area formed by the power transmitting coil 150 perpendicularly. Specifically, as illustrated in FIG. 10, when the second power receiving coil 140b and the power transmitting coil 150 have a deformed oval shape in which centers of circular arcs constituting the major axes of the second power receiving coil 140b and the power transmitting coil 150 are the same, a length of the major axis of the second power receiving coil 140b may be shorter than a length of the major axis of the power transmitting coil 150.

With the above-described structural properties, a maximum amount of electric currents may be induced to the second power receiving coil 140b, and the second power receiving coil 140b may supply the induced currents to an electronic device in the lid 120.

Referring to FIG. 11, the second power receiving coil 140b may be electrically connected to a plurality of electronic devices in the lid 120. Accordingly, the plurality of electronic devices may be supplied with induced currents generated in the second power receiving coil 140b as a power source.

The plurality of electronic devices may operate on the basis of the power source supplied by the second power receiving coil 140b. For example, the control module 121 may control entire operations (e.g., a discharge and a cutoff of steam of the steam discharge module 124) of the wireless induction heating cooker 100 on the basis of the power source supplied by the second power receiving coil 140b, and the communication module 122 may perform data communication with a communicator 240 of the induction heating apparatus on the basis of the power source supplied by the second power receiving coil 140b. Additionally, the display module 123 may visually output state information of the wireless induction heating cooker 100 on the basis of the power source supplied by the second power receiving coil 140b.

The wireless induction heating cooker 100, as illustrated in FIG. 11, may further include a second power conversion circuit 180 that delivers electric currents, induced to the second power receiving coil 140b, to an electronic device in the lid 120.

Referring to FIGS. 2 and 3, the second power conversion circuit 180 may be provided in the lid 120 in the form of a packaged integrated circuit. Referring back to FIG. 11, an input terminal of the second power conversion circuit 180 may be connected to the second power receiving coil 140b, and an output terminal of the second power conversion circuit 180 may be connected to each of the electronic devices in the lid 120. Accordingly, the second power conversion circuit 180 may convert electric currents induced to the second power receiving coil 140b into a stable DC voltage and may supply the stable DC voltage to each electronic device.

Specifically, alternating currents may be induced to the second power receiving coil 140b, and each electronic device may be supplied with a predetermined-magnitude DC voltage as a power source to perform operations, according to its specification.

The second power conversion circuit 180 may store the electric currents induced to the second power receiving coil 140b as a DC voltage, may increase or decrease the stored DC voltage to generate a predetermined-magnitude DC voltage adequate for specifications of each electronic device, and may output the generated DC voltage to each electronic device.

As an example, the second power conversion circuit 180 may include a converter (e.g., a buck converter, a boost converter, a buck-boost converter and the like), and a regulator. First, the second power conversion circuit 180 may convert alternating currents induced to the second power receiving coil 140b into a DC voltage using the converter. In this case, a voltage induced to the second power receiving coil 140b may be increased or decreased according to properties of the converter and may be converted into a DC voltage. Next, the second power conversion circuit 180 may convert magnitude of the DC voltage converted by the converter into a predetermined-magnitude voltage adequate for specifications of each electronic device, and may output the converted predetermined-magnitude voltage to each electronic device, using the regulator.

Accordingly, each electronic device (e.g., the above-described control module 121, communication module 122, and display module 123) may operate using a DC voltage adequate for its specifications.

The wireless induction heating cooker, as described above, may perform entire cooking operations by wirelessly receiving power from the induction heating apparatus, thereby heating an item subject to cooking and carrying out all the operations for user convenience, without a connection to an external power source or without an internal battery.

Referring back to FIG. 11, the wireless induction heating cooker 100 may further include a battery 190 that stores the electric currents induced to the second power receiving coil 140b.

The battery 190 may be provided in the lid 120 and may store the electric currents induced to the second power receiving coil 140b as reserved power. To this end, the second power conversion circuit 180 may control magnitude of the electric currents induced to the second power receiving coil 140b to charge the battery 190.

The battery 190 may be connected to each of the electronic devices in the lid 120 and each electronic device may receive a power source from the battery 190 and may operate. Specifically, when each of the electronic devices operates by using the DC voltage output from the second power conversion circuit 180 and, then when the second power conversion circuit 180 no longer outputs DC voltages, may operate by receiving DC voltages from the battery 190.

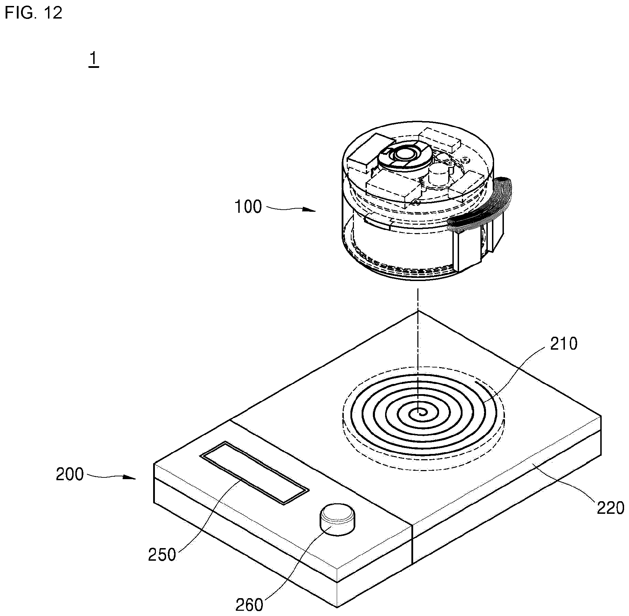

Next, an exemplary wireless induction heating system is described with reference to FIGS. 11 and 12.

FIG. 12 is a view illustrating an exemplary wireless induction heating system.

Referring to FIG. 12, the wireless induction heating system 1 may include an induction heating apparatus 200, and a wireless induction heating cooker 100 that operates on the induction heating apparatus 200. The induction heating apparatus 200 and the wireless induction heating cooker 100 constituting the wireless induction heating system 1 are the same as the induction heating apparatus and the wireless induction heating cooker described with reference to FIGS. 2 to 10. Below, differences are described.

The induction heating apparatus 200 may generate a magnetic field through the heating coil 210, and the wireless induction heating cooker 100 may operate on an area formed by the heating coil 210.

The area formed by the heating coil 210 may be a minimum area that may include all parts of the heating coil 210. For example, when the heating coil 210 is a planar circular coil, a surface area of the area formed by the heating coil 210 may be a surface area of a circle determined by a coil radius that is a distance from a center of the heating coil 210 to an outer circumferential surface of the heating coil 210.

Referring to FIGS. 11 and 12, the induction heating apparatus 200 may include a heating coil 210, a controller 230, a communicator 240, a display 250 and a knob switch 260. The induction heating apparatus 200 in FIGS. 11 and 12 is provided as an embodiment, and components of the induction heating apparatus 200 are not limited to those of the embodiment in FIGS. 11 and 12. When necessary, some components may be added, modified or removed.

The controller 230 may control the heating coil 210 and the display 250. Specifically, the controller 230 may control output from the heating coil 210 and may control the display 250 such that the display 250 outputs state information of the induction heating apparatus 200.

The knob switch 260 may be provided on an upper surface of the induction heating apparatus 200, and may supply a signal according to degrees of rotation of the knob switch to the controller 230. The controller 230 may determine output of the heating coil 210 according to the signal supplied by the knob switch 260. In other words, the output from the heating coil 210 may be controlled according to a degree to which the knob switch 260 rotates.

The wireless induction heating cooker 100 may be placed in the area formed by the heating coil 210 and may be operated. Specifically, an area formed by the bottom surface of the wireless induction heating cooker 100 may be included in the area formed by the heating coil 210.

The wireless induction heating cooker 100 may perform cooking operations using a magnetic field generated in the heating coil 210. The cooking operations may include entire operations of the above-described control module 121, communication module 122 and display module 123 as well as an operation of cooking an item subject to cooking through heating of the internal pot.

The induction heating apparatus 200 and the wireless induction heating cooker 100 may share state information by performing mutual data communication. The induction heating apparatus 200 may control output from the heating coil 210 on the basis of state information of the wireless induction heating cooker, and the wireless induction heating cooker 100 may control an internal electronic device on the basis of state information of the induction heating apparatus 200.

The present disclosure described above may be replaced, modified and changed in various different forms by one having ordinary skill in the art to which the present disclosure pertains without departing from the scope of the claims. Thus, the disclosure is not limited to the above-described embodiments and the accompanying drawings.

## Claims

1. A wireless induction heating cooker (100), comprising:
a main body (110);
a lid (120) coupled to the main body (110);
an internal pot (130) configured to be stored in the main body (110) to be heated;
a first power receiving coil (140a) disposed at a bottom portion of the main body (110) and configured for induction of electric currents therein;
a lateral surface heating coil (160) disposed at a circumferential portion of the internal pot (130) and connected to the first power receiving coil (140a) to heat the internal pot (130) using the induced electric currents;
a power transmitting coil (150) disposed on the main body (110) and connected to the first power receiving coil (140a) to generate a magnetic field using the induced electric currents; and
a second power receiving coil (140b) disposed on the lid (120) to be inductively coupled to the power transmitting coil (150),
**characterized in that**
the lid (120) includes at least one electronic device, wherein the second power receiving coil (140b) is connected to the electronic device for supplying thereto electric currents induced by the magnetic field of the power transmitting coil (150), and
one end of the first power receiving coil (140a) and one end of the lateral surface heating coil (160) are connected to each other, and the other end of the first power receiving coil (140a) and the other end of the lateral surface heating coil (160) are connected to each other through a resonance capacitor.

2. The wireless induction heating cooker of claim 1, wherein the first power receiving coil (140a) is arranged at the main body opposite to an edge area of the internal pot (130).

3. The wireless induction heating cooker of claim 1 or 2, wherein a bottom surface of the internal pot (130) includes a flat plate area, and
wherein the first power receiving coil (140a) is formed facing a portion between the flat plate area and a lateral surface of the internal pot (130).

4. The wireless induction heating cooker of any one of the preceding claims, wherein the first power receiving coil (140a) is arranged opposite to a portion between the outer diameter (Ro) of the internal pot (130) and a second reference radius (Rf2) being greater than the outer diameter (Ro).

5. The wireless induction heating cooker of any one of the preceding claims, wherein the first power receiving coil (140a) is disposed horizontally and/or has a ring-shape or spiral-shape to surround the internal pot (130).

6. The wireless induction heating cooker of any one of the preceding claims, wherein the lateral surface heating coil (160) is wound around a lateral surface of the internal pot (130) and/or is disposed vertically.

7. The wireless induction heating cooker of any one of the preceding claims, wherein the internal pot (130) further comprises a metallic plate configured to be heated by electromagnetic induction and formed on an outer surface and/or in a lower portion of the internal pot (130).

8. The wireless induction heating cooker of any one of the preceding claims, further including a first power conversion circuit (170) configured to provide the electric currents induced in the first power receiving coil (140a) to the power transmitting coil (150).

9. The wireless induction heating cooker of any one of the preceding claims, further including a second power conversion circuit (180) configured to supply the electric currents induced in the second power receiving coil (140b) to the at least one electronic device.

10. The wireless induction heating cooker of any one of the preceding claims, wherein the power transmitting coil (150) is horizontally mounted to an upper portion of the main body (110), and
the second power receiving coil (140b) is horizontally mounted to a portion of the lid (120) facing the upper portion of the main body (110).

11. The wireless induction heating cooker of any one of the preceding claims, wherein the second power receiving coil (140b) is disposed to overlap with the power transmitting coil (150) and/or arranged in parallel to the power transmitting coil (150).

12. A wireless induction heating system, comprising:
an induction heating apparatus (200) with a heating coil (210) configured to generate a magnetic field; and
a wireless induction heating cooker according to any one of the preceding claims.

13. The wireless induction heating system of claim 12, wherein an outer diameter of the first power receiving coil (140a) is smaller than an outer diameter of the heating coil (210).

## Patentansprüche

1. Drahtlose Induktionskochvorrichtung (100), die Folgendes umfasst:
einen Hauptkörper (110);
einen Deckel (120), der mit dem Hauptkörper (110) gekoppelt ist;
einen Innentopf (130), der so konfiguriert ist, dass er im Hauptkörper (110) aufgenommen ist, um beheizt zu werden;
eine erste Leistungsempfängerspule (140a), die am Bodenabschnitt des Hauptkörpers (110) angeordnet ist und zur Induktion von elektrischem Strom konfiguriert ist;
eine Spule (160) zum Heizen der Seitenfläche, die am Umfangsabschnitt des Innentopfs (130) angeordnet und mit der ersten Leistungsempfängerspule (140a) verbunden ist, um den Innentopf (130) unter Verwendung des induzierten elektrischen Stroms zu heizen;
eine Leistungssendespule (150), die am Hauptkörper (110) angeordnet und mit der ersten Leistungsempfängerspule (140a) verbunden ist, um unter Verwendung des induzierten elektrischen Stroms ein Magnetfeld zu erzeugen; und
eine zweite Leistungsempfängerspule (140b), die am Deckel (120) angeordnet ist, so dass sie mit der Leistungssendespule (150) induktiv gekoppelt ist,
**dadurch gekennzeichnet, dass**
der Deckel (120) wenigstens eine elektronische Vorrichtung umfasst, wobei die zweite Leistungsempfängerspule (140b) mit der elektronischen Vorrichtung verbunden ist, um ihr elektrischen Strom zuzuführen, der durch das Magnetfeld der Leistungssendespule (150) induziert wird, und
ein Ende der ersten Leistungsempfängerspule (140a) und ein Ende der Spule (160) zum Heizen der Seitenfläche miteinander verbunden sind, und das andere Ende der ersten Leistungsempfängerspule (140a) und das andere Ende der Spule (160) zum Heizen der Seitenfläche durch einen Resonanzkondensator miteinander verbunden sind.

2. Drahtlose Induktionskochvorrichtung nach Anspruch 1, wobei die erste Leistungsempfängerspule (140a) am Hauptkörper gegenüber einem Kantenbereich des Innentopfs (130) angeordnet ist.

3. Drahtlose Induktionskochvorrichtung nach Anspruch 1 oder 2, wobei eine Bodenfläche des Innentopfs (130) eine ebene Plattenfläche umfasst, und
wobei die erste Leistungsempfängerspule (140a) so ausgebildet ist, dass sie zu einem Abschnitt zwischen der ebenen Plattenfläche und einer Seitenfläche des Innentopfs (130) zeigt.

4. Drahtlose Induktionskochvorrichtung nach einem der vorhergehenden Ansprüche, wobei die erste Leistungsempfängerspule (140a) gegenüber einem Abschnitt zwischen dem Außendurchmesser (Ro) des Innentopfs (130) und einem zweiten Referenzradius (Rf2), der größer als der Außendurchmesser (Ro) ist, angeordnet ist.

5. Drahtlose Induktionskochvorrichtung nach einem der vorhergehenden Ansprüche, wobei die erste Leistungsempfängerspule (140a) horizontal angeordnet ist und/oder eine Ringform oder eine Spiralform hat, so dass sie den Innentopf (130) umgibt.

6. Drahtlose Induktionskochvorrichtung nach einem der vorhergehenden Ansprüche, wobei die Spule (160) zum Heizen der Seitenfläche um eine Seitenfläche des Innentopfs (130) gewickelt ist und/oder vertikal angeordnet ist.

7. Drahtlose Induktionskochvorrichtung nach einem der vorhergehenden Ansprüche, wobei der Innentopf (130) ferner eine Metallplatte umfasst, die so konfiguriert ist, dass sie durch elektromagnetische Induktion beheizt wird und an einer Außenfläche und/oder in einem unteren Abschnitt des Innentopfs (130) ausgebildet ist.

8. Drahtlose Induktionskochvorrichtung nach einem der vorhergehenden Ansprüche, die ferner eine erste Leistungsumsetzungsschaltung (170) umfasst, die so konfiguriert ist, dass sie den elektrischen Strom, der in der ersten Leistungsempfängerspule (140a) induziert wird, der Leistungssendespule (150) bereitstellt.

9. Drahtlose Induktionskochvorrichtung nach einem der vorhergehenden Ansprüche, die ferner eine zweite Leistungsumsetzungsschaltung (180) umfasst, die konfiguriert ist, den elektrischen Strom, der in der zweiten Leistungsempfängerspule (140b) induziert wird, der wenigstens einen elektronischen Vorrichtung zuzuführen.

10. Drahtlose Induktionskochvorrichtung nach einem der vorhergehenden Ansprüche, wobei die Leistungssendespule (150) an einem oberen Abschnitt des Hauptkörpers (110) horizontal montiert ist, und
die zweite Leistungsempfängerspule (140b) an einem Abschnitt des Deckels (120), der zum oberen Abschnitt des Hauptkörpers (110) zeigt, horizontal montiert ist.

11. Drahtlose Induktionskochvorrichtung nach einem der vorhergehenden Ansprüche, wobei die zweite Leistungsempfängerspule (140b) so angeordnet ist, dass sie mit der Leistungssendespule (150) überlappt und/oder parallel zur Leistungssendespule (150) angeordnet ist.

12. Drahtloses Induktionsheizsystem, das Folgendes umfasst:
eine Induktionsheizvorrichtung (200) mit einer Heizspule (210), die konfiguriert ist, ein Magnetfeld zu erzeugen; und
eine drahtlose Induktionskochvorrichtung nach einem der vorhergehenden Ansprüche.

13. Drahtloses Induktionsheizsystem nach Anspruch 12, wobei ein Außendurchmesser der ersten Leistungsempfängerspule (140a) kleiner als ein Außendurchmesser der Heizspule (210) ist.

## Revendications

1. Appareil de cuisson à chauffage par induction sans fil (100), comportant :
un corps principal (110) ;
un couvercle (120) couplé au corps principal (110) ;
une marmite interne (130) configurée pour être rangée dans le corps principal (110) à chauffer ;
une première bobine de réception d'énergie (140a) disposée sur une partie de fond du corps principal (110) et configurée pour l'induction de courants électriques dans celle-ci ;
une bobine de chauffage de surface latérale (160) disposée sur une partie circonférentielle de la marmite interne (130) et reliée à la première bobine de réception d'énergie (140a) pour chauffer la marmite interne (130) en utilisant les courants électriques induits ;
une bobine de transmission d'énergie (150) disposée sur le corps principal (110) et reliée à la première bobine de réception d'énergie (140a) pour générer un champ magnétique en utilisant les courants électriques induits ; et
une seconde bobine de réception d'énergie (140b) disposée sur le couvercle (120) pour être couplée à la bobine de transmission d'énergie (150) de manière inductive,
**caractérisé en ce que**
le couvercle (120) inclut au moins un dispositif électronique, dans lequel la seconde bobine de réception d'énergie (140b) est reliée au dispositif électronique pour fournir à celui-ci des courants électriques induits par le champ magnétique de la bobine de transmission d'énergie (150), et
une extrémité de la première bobine de réception d'énergie (140a) et une extrémité de la bobine de chauffage de surface latérale (160) sont reliées l'une à l'autre, et l'autre extrémité de la première bobine de réception d'énergie (140a) et l'autre extrémité de la bobine de chauffage surface latérale (160) sont reliées l'une à l'autre via un condensateur résonant.

2. Appareil de cuisson à chauffage par induction sans fil selon la revendication 1, dans lequel la première bobine de réception d'énergie (140a) est agencée sur le corps principal opposé à une zone de bord de la marmite interne (130).

3. Appareil de cuisson à chauffage par induction sans fil selon la revendication 1 ou 2, dans lequel une surface de fond de la marmite interne (130) inclut une zone de plaque plane, et
dans lequel la première bobine de réception d'énergie (140a) est formée dirigée vers une partie entre la zone de plaque plane et une surface latérale de la marmite interne (130).

4. Appareil de cuisson à chauffage par induction sans fil selon l'une quelconque des revendications précédentes, dans lequel la première bobine de réception d'énergie (140a) est agencée en face d'une partie entre le diamètre extérieur (Ro) de la marmite interne (130) et un second rayon de référence (Rf2) qui est supérieur au diamètre extérieur (Ro).

5. Appareil de cuisson à chauffage par induction sans fil selon l'une quelconque des revendications précédentes, dans lequel la première bobine de réception d'énergie (140a) est disposée horizontalement et/ou a une forme annulaire ou une forme en spirale pour entourer la marmite interne (130).

6. Appareil de cuisson à chauffage par induction sans fil selon l'une quelconque des revendications précédentes, dans lequel la bobine de chauffage de surface latérale (160) est enroulée autour d'une surface latérale de la marmite interne (130) et/ou est disposée verticalement.

7. Appareil de cuisson à chauffage par induction sans fil selon l'une quelconque des revendications précédentes, dans lequel la marmite interne (130) comporte en outre une plaque métallique configurée pour être chauffée par induction électromagnétique et formée sur une surface extérieure et/ou dans une partie inférieure de la marmite interne (130).

8. Appareil de cuisson à chauffage par induction sans fil selon l'une quelconque des revendications précédentes, incluant en outre un premier circuit de conversion d'énergie (170) configuré pour fournir les courants électriques induits dans la première bobine de réception d'énergie (140a) à la bobine de transmission d'énergie (150).

9. Appareil de cuisson à chauffage par induction sans fil selon l'une quelconque des revendications précédentes, incluant en outre un second circuit de conversion d'énergie (180) configuré pour fournir les courants électriques induits dans la seconde bobine de réception d'énergie (140b) au au moins un dispositif électronique.

10. Appareil de cuisson à chauffage par induction sans fil selon l'une quelconque des revendications précédentes, dans lequel la bobine de transmission d'énergie (150) est montée horizontalement sur une partie supérieure du corps principal (110), et
la seconde bobine de réception d'énergie (140b) est montée horizontalement sur une partie du couvercle (120) dirigée vers la partie supérieure du corps principal (110).

11. Appareil de cuisson à chauffage par induction sans fil selon l'une quelconque des revendications précédentes, dans lequel la seconde bobine de réception d'énergie (140b) est disposée de manière à chevaucher la bobine de transmission d'énergie (150) et/ou agencée parallèlement à la bobine de transmission d'énergie (150).

12. Système de chauffage par induction sans fil, comportant :
un appareil de chauffage par induction (200) avec une bobine de chauffage (210) configurée pour générer un champ magnétique ; et
un appareil de cuisson à chauffage par induction sans fil selon l'une quelconque des revendications précédentes.

13. Système de chauffage par induction sans fil selon la revendication 12, dans lequel un diamètre extérieur de la première bobine réception d'énergie (140a) est plus petit qu'un diamètre extérieur de la bobine de chauffage (210).
